# EUROPEAN PATENT APPLICATION

(11) **EP 2 733 621 A2**
(43) Date of publication of application: **21.05.2014**
(21) Application number: 12812021.9
(22) Date of filing: 26.04.2012
(51) Int. Cl.: G06F 15/16, H04W 4/12

(54) **METHOD FOR TRANSMITTING A MOBILE BUSINESS CARD, AND RECORDING MEDIUM FOR SAME**

(30) Priority: 13.07.2011 KR 20110069671
(71) Applicant: Chae, Soo Nam, Incheon 403-830 (KR)
(72) Inventor: Chae, Soo Nam, Incheon 403-830 (KR)
(74) Representative: Stevens, Jason Paul
(86) International application number: PCT/KR2012/003266
(87) International publication number: WO 2013/008997

(57) **Abstract**

The present invention relates to a method of transmitting a mobile business card, and to a recording medium for same. According to the method of transmitting the mobile business card and the recording medium for same, when calling a third party through a mobile phone, a multimedia file and a personal information file are converted into an XML file and transmitted to the third party so that the converted XML file is automatically stored in the mobile phone of the third party, the information extracted from the automatically-stored XML file is saved as separate pieces of information in the mobile phone of the third party, and the information is displayed again in real time, so as to enable the effect of making available the information and promotional information of a user. By continuously displaying the stored information extracted from the XML file on the mobile phone of the third party when the corresponding number thereof is called, the publicizing effect of the business card of the user can last for a long time in order to make a lasting impression on the third party. Because there is no need for a separate passive storage process for information on an incoming mobile phone number due to the automatic storing by means of the initial XML file, user convenience for the user of the mobile phone is increased.

## Description

### TECHNICAL FIELD

The present invention relates to a mobile business card transmission method and a recording medium thereof, and more specifically, to a mobile business card transmission method and a recording medium thereof, which may function as an electronic business card through personal information and a multimedia file of a user stored in a cellular phone of a counterpart and perform various marketing functions when an enterprise or the like serves a customer, by combining a multimedia file recorded and stored through a cellular phone of the user with personal information of the user himself or herself and transmitting the combined file to the cellular phone of the counterpart as an XML file, and automatically storing the personal information in the cellular phone of the counterpart as the transmitted XML file is automatically stored and decoded in the cellular phone of the counterpart.

### BACKGROUND ART

As cellular phones, PDAs, notebook computers capable of wireless data communication and the like are advanced, increased is the tendency of showing up a device unique only to a member by displaying characters, pictures, animations, moving images or the like which can show personality of the member on a display window. Owing to such a tendency, communication companies and Internet companies develop and provide various contents to consumers.

However, distribution of smart phones is abruptly increased with rapid advancement in wireless data communication networks, and programs appropriate to the smart phones such as various applications or the like are developed and realized accordingly.

Although applications including various contents are developed in a variety of forms so that a user may enjoy a game, photographing, a moving image or the like, in addition to a program capable of uni-directional or bidirectional communications, a method of publicizing a cellular phone owner by himself or herself is no more than informing a counterpart of the existence of the cellular phone owner by using a character message of a conventional old-style cellular phone or simply adding an image or the like to the character message, and thus the character message may be mistakenly regarded as a spam message.

Furthermore, publicizing oneself is the most essential thing in the modern age of free competition in which the society is rapidly changing and individualistic tendency is intensified, and the most widely used method of publicizing oneself is simply performed off-line through a business card, i.e., a piece of paper on which a cellular phone number, an address, a company and the like are recorded. Although an electronic business card is disclosed as a method of complementing the disadvantages of the printed business card using a cellular phone or a smart phone in order to improve the situation of the conventional method, this is no more than simply informing a counterpart of existence of a person using a separate character message.

That is, it is general that a message simply containing only a cellular phone number of an individual, an image of the individual and related characters is transmitted in a multi-media message service (MMS) method. Such a message may not draw attention of the counterpart, may be mistakenly regarded as a spam mail as described above and even may give the counterpart an unpleasant feeling rather than publicizing himself or herself. In addition, there are restrictions in including contents of a multimedia file in a message, and although the multimedia file can be included, there is a limit in the capacity.

Therefore, as the smart phones are distributed recently, something which can distinctively function as a special business card unique only to a person and fully expressing his or her personality is required, and a method which can realize an effect of advertisement or public relations through this function is required.

### DISCLOSURE OF INVENTION

### TECHNICAL PROBLEM

Therefore, the present invention has been made in view of the above problems, and it is an object of the present invention to provide a mobile business card transmission method and a recording medium thereof, in which since a multimedia file and a personal information file are converted into an XML file and transmitted to a counterpart when a user makes a phone call to the counterpart using a cellular phone, the converted XML file is automatically stored in the cellular phone of the counterpart, and information extracted from the automatically stored XML file is stored in the cellular phone of the counterpart by the type of the information, and then the stored information is displayed in real-time so as to advertise only the user and information on the user.

In addition, another object of the present invention is to provide a mobile business card transmission method and a recording medium thereof, which can give a strong impression of a user to a counterpart by performing the function of a business card for publicizing the user for an extended period of time by continuously displaying the stored information extracted from the XML file according to a phone number calling the cellular phone of the counterpart and, in addition, increase convenience of the cellular phone user since a separate manual process of storing information on a cellular phone number calling the counterpart is not needed as the information is automatically stored by the XML file initially.

### TECHNICAL SOLUTION

To accomplish the above objects, according to one aspect of the present invention, there is provided a method of transmitting a mobile business card, the method including the steps of: creating and storing personal information 1a in a cellular phone 1 (S10); combining a multimedia file 1 b such as a picture, a moving image, a sound or the like stored or created in the cellular phone 1 with the personal information 1 a created through the personal information creation step, and encoding the combined file into an XML file (S20); selectively storing the encoded XML file 1 c into a storage unit 2a included in the cellular phone or a memory card 2b connected through an interface of the cellular phone (S30); decoding a plurality of XML files stored in the storage unit 2a or the memory card 2b into multimedia files such as a picture, a moving image, a sound or the like combined with the personal information 1a, and displaying the XML files to be arranged on a screen of the cellular phone 1 (S40); selecting an XML file from the plurality of decoded XML files by a user (S50); reading the XML file selected by the user among the plurality of XML files stored in the storage unit 2a or the memory card 2b (S60); transmitting the read XML file to a communication company server 5 together with a cellular phone number of a counterpart (S70); temporarily storing the XML file in the communication company server 5 and attempting connection to the cellular phone number of the counterpart (S80); transmitting the XML file from the communication company server 5 to the connected cellular phone 4 of the counterpart through a base station 3 (S90); automatically storing the received XML file into a storage unit 5a included in the cellular phone 4 of the counterpart or a memory card 5b connected through an interface of the cellular phone (S100); and extracting the personal information 1 a and the multimedia file 1 b such as a picture, a moving image, a sound or the like by decoding the automatically stored XML file, and automatically storing the personal information 1 a and the multimedia file 1 b into a phone book of the counterpart and displaying the personal information 1a and the multimedia file 1 b on a screen of the cellular phone 4 of the counterpart (S110).

Here, the personal information 1a includes at least one of a cellular phone number, a landline phone number, a facsimile phone number, an e-mail address, and a personal blog of the user, and the multimedia file 1 b is any one of jpg, gif, tif, avi, mp3, mp4, adf and wmv files.

Meanwhile, the method of transmitting a mobile business card further includes the step of controlling automatic storage of the XML file by selection of the user S200, in which if the automatic storage of the XML file is inhibited by the user, decoding of the personal information 1a and the multimedia file 1b is restricted, and only a state of a phone call connected to the cellular phone 4 of the counterpart is maintained.

According to another aspect of the present invention, there is provided a recording medium including: a program code for forming and storing personal information 1a including at least one of a cellular phone number, a landline phone number, a facsimile phone number, an e-mail address, and a personal blog of a user in a cellular phone 1; a program code for combining a multimedia file 1 b such as a picture, a moving image, a sound or the like stored or created in the cellular phone 1 with the personal information 1 a created through the personal information creation step, and encoding the combined file into an XML file; a program code for selectively storing the encoded XML file into a storage unit 2a included in the cellular phone 1 or a memory card 2b connected through an interface of the cellular phone; a program code for decoding a plurality of XML files stored in the storage unit 2a or the memory card 2b into multimedia files such as a picture, a moving image, a sound or the like combined with the personal information 1a, and displaying the XML files to be arranged on a screen of the cellular phone 1; a program code for selecting an XML file from the plurality of decoded XML files by a user; a program code for reading the XML file selected by the user among the plurality of XML files stored in the storage unit 2a or the memory card 2b; a program code for transmitting the read XML file to a communication company server 5 together with a cellular phone number of a counterpart; a program code for temporarily storing the XML file in the communication company server 5 and attempting connection to the cellular phone number of the counterpart; a program code for transmitting the XML file from the communication company server 5 to the connected cellular phone 4 of the counterpart through a base station 3; a program code for automatically storing the received XML file into a storage unit 5a included in the cellular phone 4 of the counterpart or a memory card 5b connected through an interface of the cellular phone; and a program code for extracting the personal information 1 a and the multimedia file 1 b such as a picture, a moving image, a sound or the like by decoding the automatically stored XML file, and automatically storing the personal information 1a and the multimedia file 1b into a phone book of the counterpart and displaying the personal information 1a and the multimedia file 1 b on a screen of the cellular phone 4 of the counterpart.

Here, the recording medium further includes a program code for controlling automatic storage of the XML file by selection of the user, in which if the automatic storage of the XML file is inhibited by the user, decoding of the personal information 1 a and the multimedia file 1b is restricted, and the personal information 1 a and the multimedia file 1 b are displayed on the cellular phone 4 of the counterpart.

### ADVANTAGEOUS EFFECTS

The present invention is effective in that since a multimedia file and a personal information file are converted into an XML file and transmitted to a counterpart when a user makes a phone call to the counterpart using a cellular phone, the converted XML file is automatically stored in the cellular phone of the counterpart, and information extracted from the automatically stored XML file is stored in the cellular phone of the counterpart by the type of the information, and then the stored information is displayed in real-time so as to advertise only the user and information on the user, and the present invention is advantageous in that it can give a strong impression of a user to a counterpart by performing the function of a business card for publicizing the user for an extended period of time by continuously displaying the stored information extracted from the XML file according to a phone number calling the cellular phone of the counterpart and, in addition, increase convenience of the cellular phone user since a separate manual process of storing information on a cellular phone number calling the counterpart is not needed as the information is automatically stored by the XML file initially.

### BRIEF DESCRIPTION OF THE DRAWINGS

FIG. 1 is a view showing the configuration of a mobile business card transmission method and a recording medium thereof according to the present invention.
FIG. 2 is a block diagram showing a mobile business card transmission method and a recording medium thereof according to the present invention.
FIG. 3 is a block diagram showing another embodiment of a mobile business card transmission method and a recording medium thereof according to the present invention.

### DESCRIPTION OF SYMBOLS

| | | | |
|---|---|---|---|
| 1: | Cellular phone | 2a, 5a: | Storage unit |
| 2b, 5b: | Memory card | 3: | Base station |
| 4: | Counterpart cellular phone | | |
| 5: | Communication server | | |

### BEST MODE FOR CARRYING OUT THE INVENTION

Hereafter, the configuration and operation of a mobile business card transmission method and a recording medium thereof according to the present invention will be described in detail with reference to the accompanying drawings.

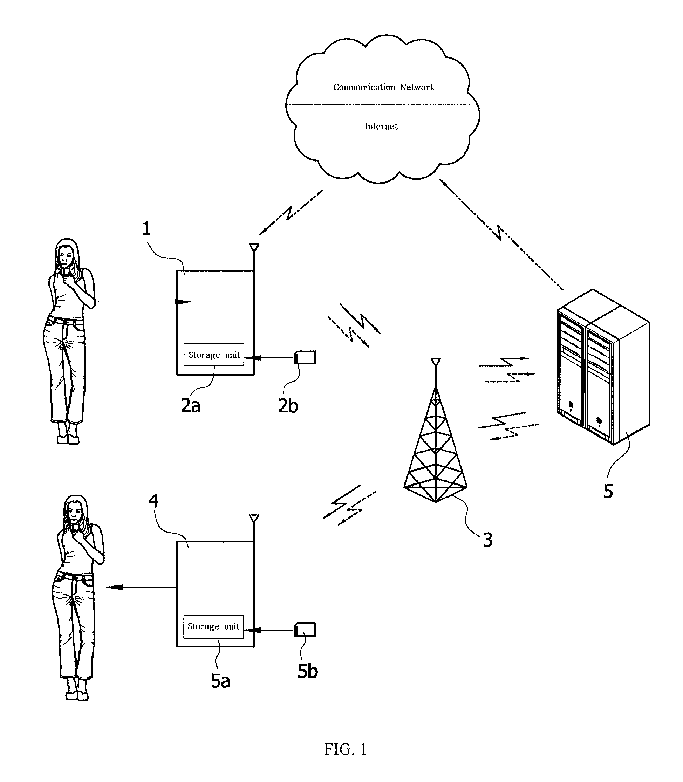

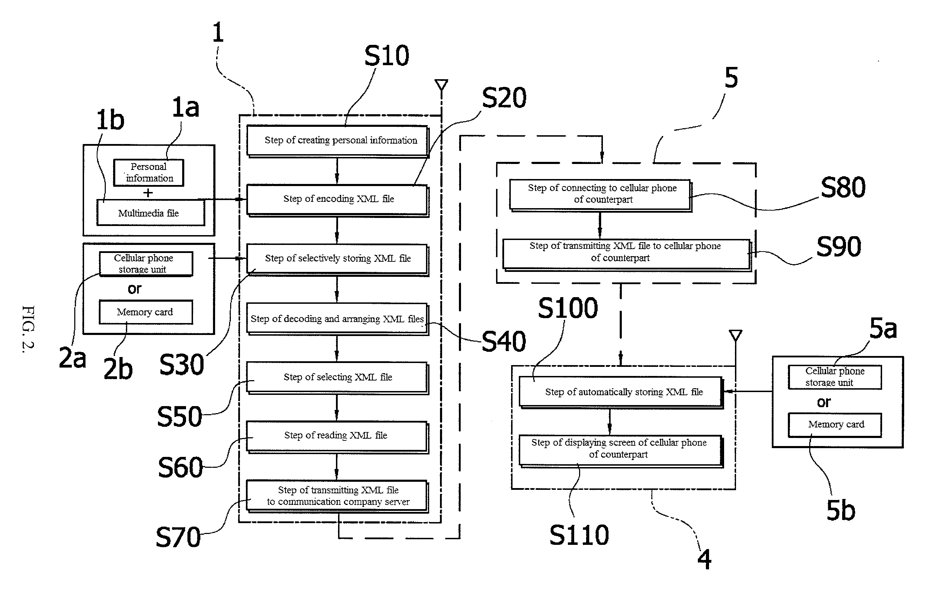

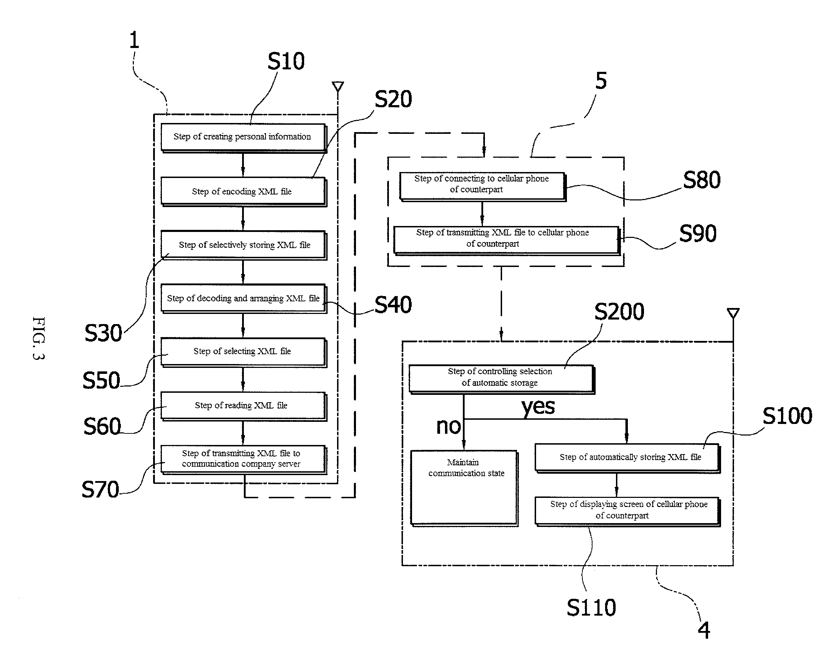

FIG. 1 is a view showing the configuration of a mobile business card transmission method and a recording medium thereof according to the present invention, FIG. 2 is a block diagram showing a mobile business card transmission method and a recording medium thereof according to the present invention, and FIG. 3 is a block diagram showing another embodiment of a mobile business card transmission method and a recording medium thereof according to the present invention.

A mobile business card transmission method and a recording medium thereof according to present invention is effective in that since a multimedia file and a personal information file are converted into an XML file and transmitted to a counterpart when a user makes a phone call to the counterpart using a cellular phone, the converted XML file is automatically stored in the cellular phone of the counterpart, and information extracted from the automatically stored XML file is stored in the cellular phone of the counterpart by the type of the information, and then the stored information is displayed in real-time so as to advertise only the user and information on the user, and the present invention is advantageous in that it can give a strong impression of a user to a counterpart by performing the function of a business card for publicizing the user for an extended period of time by continuously displaying the stored information extracted from the XML file according to a phone number calling the cellular phone of the counterpart and, in addition, increase convenience of the cellular phone user since a separate manual process of storing information on a cellular phone number calling the counterpart is not needed as the information is automatically stored by the XML file initially. As shown in FIG. 1, since various multimedia files, such as a picture, a moving image, characters, a sound and the like, and previously or immediately created personal information are combined using a cellular phone of a user and automatically stored in a cellular phone of a counterpart through a server of a communication company, this can be used like a business card publicizing the user himself or herself.

Such a mobile business card transmission method and a recording medium thereof according to the present invention are implemented, as shown in FIG. 2, through a step of creating personal information (S10), a step of encoding an XML file (S20), a step of selectively storing the XML file (S30), a step of decoding and arranging XML files on a display (S40), a step of selecting an XML file (S50), a step of reading the XML file (S60), a step of transmitting the XML file to a server of a communication company (S70), a step of connecting to a cellular phone of a counterpart (S80), a step of transmitting the XML file to the cellular phone of the counterpart (S90), a step of automatically storing the XML file (S100), and a step of displaying the screen of the cellular phone of the counterpart (S110).

### Step of creating personal information (S10)

This is a step of creating and storing personal information of a user through a cellular phone 1, and the personal information 1 a preferably includes at least one of a cellular phone number, a landline phone number, a facsimile phone number, an e-mail address, a personal blog and the like.

### Step of encoding an XML file (S20)

The multimedia file 1 b such as a picture, a moving image, a sound or the like stored or created in the cellular phone 1 and the personal information 1a created through the personal information creation step are combined and encoded into an XML file.

### Step of selectively storing an XML file (S30)

The encoded XML file 1 c is selectively stored in a storage unit 2a included in the cellular phone or a memory card 2b connected through an interface of the cellular phone. Here, when storage capability of the cellular phone is low, a storage space extended using a memory card or the like may be additionally used.

### Step of decoding and arranging XML files on a display (S40)

This is a step of decoding a plurality of XML files stored in the storage unit 2a of the cellular phone or the memory card 2b described above into multimedia files such as a picture, a moving image, a sound or the like combined with the personal information 1a and displaying the XML files to be arranged on a screen of the cellular phone 1, which is a procedure of looking for an appropriate file before selecting and transmitting a file among the XML files created as a means of public relations for publicizing a user himself or herself according to a situation or a counterpart receiving the XML file. For example, when a user desires to introduce himself or herself to a customer and sends his or her personal information combined with a logo or a moving image of a company with which the customer may easily recognize the user or the user uses the XML files for the purpose of informing friends of a current state of the user, the XML files are arranged to be visually displayed through the cellular phone so that the user may select an XML file to transmit the personal information of the user himself or herself combined with a multimedia file such as a picture, a moving image or the like appropriate for the purpose.

### Step of selecting an XML file (S50)

This is a step of selecting an XML file from the plurality of decoded XML files by a user according to a counterpart to whom the user desires to transmit the XML file.

### Step of reading an XML file (S60)

This is a step of reading the XML file selected by the selection of the user among the plurality of XML files stored in the storage unit 2a or the memory card 2b and preparing transmission of the XML file.

### Step of transmitting an XML file to a server of a communication company (S70)

This is a step of transmitting the read XML file to a server 5 of a communication company together with the cellular phone number of the counterpart, in which the XML file selected according to a counterpart to whom the user desires to introduce himself or herself as described above is transmitted together with a signal of the cellular phone number of the counterpart with whom the user desires to communicate.

### Step of connecting to a cellular phone of a counterpart (S80)

This is a step of temporarily storing the XML file in the communication company server 5 and attempting connection to the cellular phone number of the counterpart, and the connection method may vary depending on the model or unique settings of the cellular phone of the counterpart.

That is, as shown in FIG. 3, the mobile business card transmission method further includes a step of controlling automatic storage of the XML file by the selection of the user S200, and if the automatic storage of the XML file is inhibited by the user, decoding of the personal information 1a and the multimedia file 1 b is restricted, and only a state of a phone call connected to the cellular phone 4 of the counterpart is maintained. Accordingly, when the cellular phone model of the counterpart cannot decode the XML file, the communication state is not disconnected, but only transmission of the XML file is restricted. The restriction on the XML file is to maintain only the communication state by restricting transmission of the XML file when the counterpart inhibits storage of the XML file although the cellular phone may decode the XML file.

### Step of transmitting an XML file to the cellular phone of the counterpart (S90)

This is a state in which a counterpart may receive the XML file, and if it is set as shown in FIG. 3, the XML file is transmitted from the communication company server 5 to the connected cellular phone 4 of the counterpart through a base station 3.

### Step of automatically storing an XML file (S100)

The received XML file is automatically stored in a storage unit 5a included in the cellular phone 4 of the counterpart or a memory card 5b connected through an interface of the cellular phone. At this point, the counterpart is in a state of maintaining the communication and may make a phone call.

### Step of displaying the screen of the cellular phone of the counterpart (S110)

Thereafter, the personal information 1 a and the multimedia file 1 b such as a picture, a moving image, a sound or the like are extracted by decoding the automatically stored XML file, automatically stored in a phone book of the counterpart and displayed on the screen of the cellular phone 4 of the counterpart. This procedure starts from the time point of generating a connection signal, i.e., a bell sound, for connecting to the cellular phone of the counterpart and informs the counterpart of the user by expressing the user as a visual part and an aural sound part of the cellular phone screen.

Thereafter, when the user attempts a phone call to the cellular phone of the counterpart, a data of a corresponding phone number is compared with the data automatically stored in advance in the storage unit of the cellular phone of the counterpart with respect to the corresponding phone number and displayed on the screen, and since the personal information of the user is continuously displayed, the mobile business card transmission method may sufficiently accomplish the role of a business card.

Since such a method does not merely play the role of a business card, but can be utilized as a marketing means for advertisement or public relations of an enterprise, the effect of advertisement is increased.

Here, it is preferable that the multimedia file is any one of jpg, gif, tif, avi, mp3, mp4, adf and wmv files. That is, since the multimedia file includes a moving image, a sound, an image or the like and even a large-scale data may be transmitted through data streaming, a user may further effectively publicize himself or herself.

It is apparent that a program for creating an XML file by combining personal information and a multimedia file and transmitting the XML file is installed in a cellular phone of a user through the Internet or a communication network by means of a recording medium stored in a server of a communication company and the user may express his or her personal information in real-time through a phone call as the installed recording medium is recorded in an associative device or the like of the cellular phone. In order to make it possible to wiredly or wirelessly connect the recording medium to a cellular phone, such a recording medium may include, for example, a hard disk, a RAM device, a ROM device, a compact disk, a DVD, a CD-ROM, a magnetic optical disk, a floppy disk, a digital tape and the like.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A method of transmitting a mobile business card, comprising the steps of:
creating and storing personal information 1a in a cellular phone 1 (S10);
combining a multimedia file 1 b such as a picture, a moving image, a sound or the like stored or created in the cellular phone 1 with the personal information 1 a created through the personal information creation step, and encoding the combined file into an XML file (S20);
selectively storing the encoded XML file 1 c into a storage unit 2a included in the cellular phone or a memory card 2b connected through an interface of the cellular phone (S30);
decoding a plurality of XML files stored in the storage unit 2a or the memory card 2b into multimedia files such as a picture, a moving image, a sound or the like combined with the personal information 1a, and displaying the XML files to be arranged on a screen of the cellular phone 1 (S40);
selecting an XML file from the plurality of decoded XML files by a user (S50);
reading the XML file selected by the user among the plurality of XML files stored in the storage unit 2a or the memory card 2b (S60);
transmitting the read XML file to a communication company server 5 together with a cellular phone number of a counterpart (S70);
temporarily storing the XML file in the communication company server 5 and attempting connection to the cellular phone number of the counterpart (S80);
transmitting the XML file from the communication company server 5 to the connected cellular phone 4 of the counterpart through a base station 3 (S90);
automatically storing the received XML file into a storage unit 5a included in the cellular phone 4 of the counterpart or a memory card 5b connected through an interface of the cellular phone (S100); and
extracting the personal information 1 a and the multimedia file 1 b such as a picture, a moving image, a sound or the like by decoding the automatically stored XML file, and automatically storing the personal information 1 a and the multimedia file 1 b into a phone book of the counterpart and displaying the personal information 1 a and the multimedia file 1 b on a screen of the cellular phone 4 of the counterpart (S110).

2. The method according to claim 1, wherein the personal information 1a includes at least one of a cellular phone number, a landline phone number, a facsimile phone number, an e-mail address, and a personal blog of the user.

3. The method according to claim 1, wherein the multimedia file 1b is any one of jpg, gif, tif, avi, mp3, mp4, adf and wmv files.

4. The method according to claim 1, further comprising the step of controlling automatic storage of the XML file by selection of the user S200, wherein if the automatic storage of the XML file is inhibited by the user, decoding of the personal information 1 a and the multimedia file 1 b is restricted, and only a state of a phone call connected to the cellular phone 4 of the counterpart is maintained.

5. A recording medium comprising:
a program code for creating and storing personal information 1 a including at least one of a cellular phone number, a landline phone number, a facsimile phone number, an e-mail address, and a personal blog of a user in a cellular phone 1;
a program code for combining a multimedia file 1 b such as a picture, a moving image, a sound or the like stored or created in the cellular phone 1 with the personal information 1a created through the personal information creation step, and encoding the combined file into an XML file;
a program code for selectively storing the encoded XML file into a storage unit 2a included in the cellular phone 1 or a memory card 2b connected through an interface of the cellular phone;
a program code for decoding a plurality of XML files stored in the storage unit 2a or the memory card 2b into multimedia files such as a picture, a moving image, a sound or the like combined with the personal information 1 a, and displaying the XML files to be arranged on a screen of the cellular phone 1;
a program code for selecting an XML file from the plurality of decoded XML files by a user;
a program code for reading the XML file selected by the user among the plurality of XML files stored in the storage unit 2a or the memory card 2b;
a program code for transmitting the read XML file to a communication company server 5 together with a cellular phone number of a counterpart;
a program code for temporarily storing the XML file in the communication company server 5 and attempting connection to the cellular phone number of the counterpart;
a program code for transmitting the XML file from the communication company server 5 to the connected cellular phone 4 of the counterpart through a base station 3;
a program code for automatically storing the received XML file into a storage unit 5a included in the cellular phone 4 of the counterpart or a memory card 5b connected through an interface of the cellular phone; and
a program code for extracting the personal information 1 a and the multimedia file 1 b such as a picture, a moving image, a sound or the like by decoding the automatically stored XML file, and automatically storing the personal information 1 a and the multimedia file 1 b into a phone book of the counterpart and displaying the personal information 1 a and the multimedia file 1 b on a screen of the cellular phone 4 of the counterpart.

6. The recording medium according to claim 5, further comprising a program code for controlling automatic storage of the XML file by selection of the user, wherein if the automatic storage of the XML file is inhibited by the user, decoding of the personal information 1 a and the multimedia file 1 b is restricted, and the personal information 1 a and the multimedia file 1 b are displayed on the cellular phone 4 of the counterpart.
